# EUROPEAN PATENT APPLICATION

(11) **EP 3 936 012 A1**
(43) Date of publication of application: **12.01.2022**
(21) Application number: 20184528.6
(22) Date of filing: 07.07.2020
(51) Int. Cl.: A47J 36/32, A47J 44/02, A47J 44/00

(54) **SYSTEM FOR AUTOMATED COOKING AND SERVING OF MEALS AND A METHOD TO COOK AND SERVE A MEAL VIA A SYSTEM FOR AUTOMATED COOKING AND SERVING OF MEALS**

(71) Applicant: Da Vinci Kitchen GmbH, 04179 Leipzig (DE)
(72) Inventor: SCHRÖTER, Hendrik, 04317 Leipzig (DE); FREIHUBE, Fabian, 04275 Leipzig (DE); MILLER, Olaf, 04299 Leipzig (DE)
(74) Representative: Seemann & Partner Patentanwälte mbB

(57) **Abstract**

The invention relates to a system (2) and a method for automated cooking and serving of meals. The system (2) comprises an automated preparation device (10), which is configured to receive order data for a meal, the order data containing information about the kind of meal requested by a customer. The preparation device (10) encompasses a master controller (70) and subsystems, the subsystems including i) a motion system (30) with at least one mechanical actuator (31), configured to hold and operate tools and move items within the preparation device, ii) a dispensing system (50) with at least one container (51) holding ingredients and iii) a cooking device system (60) with at least one cooking device to hold the ingredients. The master controller (70) is configured to convert the order data into command data, the command data containing instructions for the subsystems necessary for preparing the meal. The command data is transmitted to the subsystems in order to operate the dispensing system (50) according to the command data to dispense the ingredients specified in the command data into the at least one cooking device and operate the cooking device system (60) and/or the motion system (30) according to the command data to prepare the meal from the ingredients in the at least one cooking device.

## Description

The invention relates to a system for automated cooking and serving of meals and a method to cook and serve a meal via a system for automated cooking and serving of meals.

Pasta, an ancient foodstuff, is one of the most popular dishes served in millions of restaurants around the world. Scholars believe that it dates to the 1 st century AD. Horace, the roman poet, mentions sheets of fried dough as an everyday fare in his writings. Through the ages, pasta evolved into several cuisines, and moved into industrial manufacturing in the 17th Century, when the first license for the first pasta factory was issued in Venice, Italy. For industrially fabricated pasta, flour and water are mixed, the dough is formed until it is processable, and the pasta is made into its desired shape. As pasta evolved, many different forms of the foodstuff appeared, encompassing various shapes, sizes, ingredients, and consistencies. This resulted in many different cooking methods, doughs, dishes, and preparations of what we call pasta. In fact, each type of noodle has a specific purpose in Italian pasta culture.

When cooking pasta or rice, "al dente" describes when the food is cooked to be firm to the bite. The etymology is Italian for "to the tooth". In contemporary Italian cooking, the term identifies the ideal consistency for pasta and involves a brief cooking time. In fact, chemistry makes pasta a truly unique dish in this regard; cooking pasta al dente changes the chemical composition of the noodle resulting in a lower glycemic index than pasta that is cooked to be soft. This has become increasingly important with the rise of diabetics around the world, and the growing popularity of the "Keto" lifestyle and diet.

As restaurant culture grew, pasta consumption has risen around the world and is at an all-time high, resulting in cultural debates on what is the perfectly cooked "al dente" pasta. To solve this question food enthusiasts, chefs, and chemists have put their collective knowledge together to test hypothesis in search of the answer. However, even armed with this knowledge, the "al dente" point that science has identified is so specific to the type of pasta, chemical composition of the dough, the geographic location of the chef, and other factors that it is next to impossible for a human to do this perfectly without aid.

More specifically, starch and protein are the main polymeric ingredients of pasta and they determine the structural and textural properties of cooked pasta. The ratio of these two in conjunction with the temperature of the water produces a mathematical timeframe that the pasta needs to be submerged in high temperature water in order to produce "al dente" pasta.

Over 15 million tonnes of pasta were consumed worldwide in 2019, doubling in the last decade. This growing demand has left a glut of experienced Chefs who are able to create consistently pasta dishes, which meet the strict criteria to be considered high-class "al dente" meals on a repeatable basis. There are also clear indicators that restaurants suffer from hiring, training, and maintaining qualified staff members.

Similar problems exist for other types of food, which require highly trained cooks to achieve a satisfying result.

It is the object of the present invention to provide a system and a method for automated cooking and serving of meals, which prepare a meal as close as possible to desired specifications.

The object is solved by a system for automated cooking and serving of meals, comprising an automated preparation device, wherein the preparation device is configured to receive order data for a meal, the order data containing information about the kind of meal requested by a customer, the preparation device encompassing a master controller and subsystems, the subsystems including
i. a motion system with at least one mechanical actuator, configured to hold and operate tools and move items within the preparation device,
ii. a dispensing system with at least one container holding ingredients and
iii. a cooking device system with at least one cooking device to hold the ingredients,
wherein the master controller is configured to convert the order data into command data, the command data containing instructions for the subsystems necessary for preparing the meal, and transmitting the command data to the subsystems in order to operate the dispensing system according to the command data to dispense the ingredients specified in the command data into the at least one cooking device and operate the cooking device system and/or the motion system according to the command data to prepare the meal from the ingredients in the at least one cooking device.

The system prepares a certain meal always the same way, according to the instructions in the command data. Advantageously, the meal will be prepared exactly according to the specifications. For example, by cooking pasta for an exact time specified in the command data, the pasta is cooked "al dente" on a repeatable basis.

The order data specifies the meal ordered by the customer. The master controller of the preparation device is provided with the order data in order to inform the preparation device about what kind of meal is requested by the customer, similar to an order in a restaurant. The master controller converts the order data into command data, which is transmitted to the individual subsystems to perform the steps necessary to prepare the meal.

The motion systems moves items around the preparation device. In addition, the at least one mechanical actuator of the motion system is configured to hold and operate tools. In particular, the at least one mechanical actuator operates tools according to the command data in order to process ingredients in the at least one cooking device.

The at least one cooking device of the cooking device system can be a variety of devices, for example a cooking pot or a noodle cooker. However, the at least one cooking device is not necessarily a device in which the ingredients are heated. For example, the at least one cooking device can be just as well a bowl to gather the ingredients or a noodle maker to create pasta out of flour and water.

The dispensing system comprises in particular a plurality of containers with different ingredients. The ingredients comprise for example water, flour, cheese, edible oil, vegetables and/or meat. In order to preserve the ingredients stored in the at least one container, the dispensing system may include a cooling system. Liquid ingredients, like water, are dispensed by liquid dispensers. In particular, at least one of the liquid dispensers comprises a peristaltic pump controlled by a stepper motor to pump the liquid dispensed by the at least one liquid dispenser. In this way, the flow of the liquid is controlled and no liquid is spilled.

In particular, the system comprises magnets arranged in and/or on a tabletop of the preparation device to hold items in fixed positions. This facilitates grabbing of items with the motion system.

During operation of the system, the preparation device might receive order data for a second meal, while a first meal is still being prepared. In this case, the preparation device has to manage a plurality of order data sets simultaneously. In order to so, the master controller prioritizes the order data sets and adjusts the command data in order to reduce the required preparation time to prepare all the requested meals. In particular, the master controller uses a plurality of algorithms, methods, and/or machine learning to prioritize the order data sets.

Preferably the preparation device includes at least one environmental sensor to measure at least one environmental condition, wherein the preparation device is configured to adjust at least one meal preparation parameter, in particular by adjusting the command data, based on the at least one environmental condition, wherein the at least one environmental sensor includes in particular an ambient temperature sensor and/or a humidity sensor and/or an air pressure sensor and/or a sensor to measure the orientation and/or tilt of the preparation device.

The at least one environmental condition includes in particular the temperature of the ambient air and/or the humidity of the ambient air and/or the pressure of the ambient air and/or an orientation of the preparation device and/or a tilt of the preparation device. However, the temperature of the ingredients in the at least one cooking device during the preparation of the meal is not an environmental condition. The temperature of the ambient air is measured in particular with a thermometer, the humidity in particular with a hygrometer, the air pressure in particular with a barometer and the orientation and/or tilt in particular with a gyrometer.

The data from the at least one environmental sensor is utilized to adjust at least one of the meal preparation parameters in order to improve the preparation of the meal. The at least one meal preparation parameter is for example a cooking time and/or a cooking temperature and/or the quantity of an ingredient dispensed into the at least one cooking device. For example, when cooking pasta the cooking time is adjusted according to the pressure of the ambient air, so that the pasta is always cooked "al dente". In this way, a perfectly cooked pasta can be achieved, no matter the altitude in which the preparation device is located or other environmental factors.

Apart from the environmental sensors the system includes in particular at least one weight sensor and/or a flow sensor in the dispensing system. The weight sensor measures the weight of the ingredients in the at least one cooking device in order to check if the right quantity of ingredients has been dispensed. The flow sensor measures the quantity of dispensed liquids.

The system comprises preferably an order control system, which is separate from the automated preparation device and which communicates with the preparation device via a wire-based or wireless connection, in particular via the internet, wherein the order control system is configured to receive the order data from a customer interface device and transmit the order data to the preparation device.

Through the order control system the order data is transmitted from the customer to the preparation device. Advantageously, the customer does not need to access the preparation device directly. Instead, the customer enters his order into the customer interface device, which converts the order into order data and transmits the order data to the order control system. Afterwards, the order control system sends the order data to the preparation device.

The order control system can be realised as hardware or software. In particular, the order control system is a cloud-based system in the internet.

The customer interface device is for example a smartphone, a computer or an order terminal close to or integrated into the preparation device. The order data might also be send from an external order application programming interface (API) to the order control system. In particular, the order data is received by the order control system from an internet connected portal, app or web browser. The customer interacts with the internet connected portal, app or web browser in particular by using an external visual input system. In particular, the order data is sent to the order control system upon successful completion and processing of a payment via a payment gateway within the application; In particular, the order data is processed and routed to a corresponding preparation device identified within the order data, wherein the order data contain variables which give it a unique set of specific identifiers, such as a local system ID. In an alternative embodiment, the order control system is part of the preparation device.

According to an embodiment of the invention the system includes at least two preparation devices, whereas the order control system is configured to transmit the order data to a specified preparation device picked from the at least two preparation devices based on at least one selection criteria, wherein the at least one selection criteria includes in particular a workload of the preparation devices and/or a distance between the location of the specified preparation device and a location of the customer.

In this embodiment the order control systems chooses a preparation device to prepare the meal according to the at least one selection criteria. In particular, the order control system uses algorithms, methods, and/or machine learning in order to choose the specified preparation device best suited to prepare the meal.

By using the workload of the preparation devices as a selection criteria, the meal will be prepared fast, even if one or more of the preparation devices have to prepare a large number of meals at the same time. The order control system chooses in particular the system with the smallest workload in order to reduce the waiting time of the customer.

By using the distance between the location of the specified preparation device and the location of the customer as a selection criteria, the distance the customer has to move in order to pick up his meal is reduced. The location of the customer is specified in the order data, in particular by transmitting the location of the customer interface device. Alternatively, the customer enters his current or future location into the customer interface device.

When using a plurality of selection criteria, the order control system in particular balances the different selection criteria and chooses the specified preparation device by using algorithms, methods, and/or machine learning.

Preferably the at least one mechanical actuator comprises a multi-axis robotic arm and/or a conveyor belt and/or a hydraulic lift. These types of actuators are especially suited to move items around the preparation device. In addition, the robotic arm is well suited to handle and operate a variety of tools.

The subsystems include in particular a utensil system containing a plurality of tools, which are formed to be detachably fixed to the at least one mechanical actuator.

The utensil system comprises in particular a variety of tools for cooking, cleaning and/or sanitizing. When a first tool is required during a certain step of the preparation of the meal, the mechanical actuator will grip the first tool from the utensil system and operate it according to the command data. When a second tool is required for a different step, the mechanical actuator will return the first tool to the utensil system and grip the second tool to perform the new task.

In particular, the plurality of tools are formed to be detachably fixed to an end of the multi-axis robotic arm. According to an embodiment, the tools comprise retaining bodies. When gripped by the at least one mechanical actuator, for example the robotic arm, the tools will automatically align themselves on the mechanical actuator due to the retaining bodies. Other items might also comprise similar retaining bodies, for example a pan or a seasoning holder.

Preferably the subsystems include a distribution system with a mechanical device, wherein the master controller is configured to operate the motion system according to the command data to transport the meal from the at least one cooking device to the distribution system and operate the distribution system according to the command data to arrange the meal in or on a serving device and deliver the meal to a pickup station of the preparation device accessible by the customer.

The serving device is for example a plate or a cardboard container. The meal is arranged on the serving device by the mechanical device and/or the motion system. The pickup station is an area of the preparation device accessible to the customer, where he can retrieve his meal. The distribution system may include a serving system, where the meal is arranged in or on the serving device. The mechanical device is in particular a mechanical actuator, for example a conveyor belt, to transport the serving device to a position, where the meal can be arranged on the serving device.

In particular, the distribution system comprises a weight sensor and/or a camera. The weight sensor weighs the prepared meal. The camera takes a picture of the prepared meal. In this way, the preparation device ensures that meal has the desired quality before delivering it to the customer.

Preferably the distribution system includes a storage device to store the meal after it is prepared, wherein the master controller is configured to control the motion system to move the meal from the storage device to the pickup station, if the customer transmits an identification feature to the preparation device, wherein in particular the identification feature is a code and/or a barcode and/or a RFID tag and/or the voice of the customer.

The storage device is used as storage for meals that are not immediately picked up by the customer. In particular, the storage device contains a heating system to keep the meals warm. In order to retrieve the meal from the storage device, the customer transmits the identification feature to the preparation device. This signals to the preparation device, that the customer is ready to pick up his meal.

The identification feature can be a code send to the customer from the order control system, which the customer has to enter into an input device on the preparation device or into an app on his smartphone. It can also be a barcode, in which case the preparation device is provided with a barcode scanner to read the barcode. The customer might be provided with a RFID-tag, which is read by a RFID-transceiver in the preparation device. The identification feature can be the voice of the customer itself. For example, the customer is requested to speak a few words when ordering his meal. These words are recorded and analysed in order to learn a voice pattern of the customer. When this voice pattern is recognized by a microphone in the preparation device, the meal is transported to the pickup station.

The subsystems include preferably a temperature system with at least one temperature device to heat or cool the ingredients in the at least one cooking device, wherein the master controller is configured to move the at least one cooking device to the temperature system during preparation of the meal.

In other words, the temperature system is utilized to heat or cool the ingredients during the preparation of the meal. It includes for example a hotplate and/or a stove. For example, if the preparation of the meal requires that the meal is heated, the motion system will move the at least one cooking device with the ingredients to a hotplate of the temperature system. Afterwards the hotplate will heat the ingredients in the cooking device according to specifications contained in the command data send to the temperature system.

In particular, the temperature system is configured to decrease or increase a heating power and/or a heating time based on feedback from the at least one environmental sensor. For example, the heating power for cooking pasta is adjusted depending on the ambient temperature. This way the pasta is cooked al dente, even if the ambient temperature is very hot or cold.

Preferably the subsystems include a washing system to wash a dirty item in the preparation device, wherein the washing system comprises a camera, a water dispenser and a detergent dispenser, wherein the master controller is configured to control the motion system to move the dirty item to the washing system, open the water dispenser and the detergent dispenser in order to clean the dirty item and verify if the dirty item is cleaned correctly with the camera.

The washing system washes cooking devices, tools, serving devices and other items after they have been used. In particular, the washing system comprises a sink, in which the dirty items are placed by the motion system and afterwards cleaned with water from the water dispenser and detergent from the detergent dispenser.

Preferably the subsystems include a hygiene system to sanitize the preparation device, wherein the hygiene system comprises at least one sanitization tool, in particular a disinfection device and/or a hygiene monitoring device, wherein the at least one mechanical actuator is configured to operate the sanitization tool to clean surfaces of the preparation device and/or inspect the surfaces for contaminations.

The hygiene system ensures that the meal is prepared in sterile conditions without contamination. The disinfection device is for example an UV light tool. The hygiene monitoring device is for example a photometer for the measurement of adenosine triphosphate (ATP).

In particular, the preparation device will use the hygiene system in regular sanitation cycles to sanitize the surfaces of the preparation device.

The subsystems include preferably a supervision system. The supervision system is configured to supervise the other subsystems. If a subsystem does not act according to specifications, the supervision system will request maintenance. If a weight sensor in a container of the dispensing system indicates, that a certain ingredient is going to run out soon, the supervision system will order a refill of this ingredient.

Additionally, the subsystems may include a fume extraction system. The fume extraction system comprises a filter, a housing, a fan, a controller and ducting and is placed on top of the preparation device to extract the fumes generated by cooking. In particular, air used by the fume extraction system is redirected to windows of the preparation device to eliminate condensation.

The subsystem may further include a seasoning holder system with at least one seasoning holder. The seasoning holder is filled with spices, for example salt or pepper. In particular, the at least one seasoning holders includes a retaining body. The retaining slows the mechanical actuator to easily grip and hold the at least one seasoning holder.

Preferably, the subsystems are independent and modular.

In other words, the subsystems can be operated independently of each other. This is advantageous, because not every subsystem is required for the preparation of every meal. Additionally, by being modular the subsystems can be extracted from the preparation device without extracting the other subsystems. This is advantageous when the subsystems need to be repaired or exchanged with another subsystem.

Further, the preparation device includes preferably a 3D-camera and an actuator controller, wherein the actuator controller is configured to receive camera data from the 3D-camera and use the camera data to check, if the at least one mechanical actuator reacts to the command data according to specifications.

With the 3D-camera and the actuator controller the mechanical actuator can be operated with great precision. Additionally, the 3D-camera can identify malfunctions of the mechanical actuator and send a maintenance warning to the supervision system.

The object is further solved by a method to cook and serve a meal via a system for automated cooking and serving of meals, containing the following steps:
- Transmitting order data to a preparation device, the order data containing information about the kind of meal requested by a customer,
- Converting the order data into command data in a master controller of the preparation device, the command data containing instructions for subsystems of the preparation device necessary for preparing the meal,

- Transmitting the command data to at least the following subsystems:
   i. a motion system with at least one mechanical actuator, configured to hold and operate tools and move items within the preparation device,
   ii. a dispensing system with at least one container holding ingredients and
   iii. a cooking device system with at least one cooking device to hold the ingredients,
- Operating the dispensing system according to the command data to dispense the ingredients specified in the command data into the at least one cooking device,
- Operating the cooking device system and/or the motion system according to the command data to prepare the meal from the ingredients in the at least one cooking device.

The method to cook and serve a meal incorporates the same features, advantages and properties as the inventive system for automated cooking and serving of meals.

Preferably at least one environmental condition is measured with at least one environmental sensor, wherein at least one meal preparation parameter is adjusted, in particular by adjusting the command data, based on the at least one environmental condition, wherein the at least one environmental sensor includes in particular an ambient temperature sensor and/or a humidity sensor and/or an air pressure sensor and/or a sensor to measure the orientation and/or tilt of the preparation device.

According to an embodiment of the invention the system for automated cooking and serving of meals comprises an order control system, which is separate from the preparation device and which communicates with the preparation device via a wire-based or wireless connection, in particular via the internet, wherein the order data is transmitted from a customer interface device to the order control system and afterwards transmitted from the order control system to the preparation device.

Preferably the order control system selects a specified preparation device picked from at least two preparation devices after receiving the order data and transmits the order data to the specified preparation device, wherein the order control system selects the specified preparation device based on at least one selection criteria, wherein the at least one selection criteria includes in particular a workload of the preparation devices and/or a distance between the location of the specified preparation device and a location of the customer specified in the order data.

The order data is preferably stored in the order control system and deleted from the master controller after the meal has been picked up by the customer.

In this way, a long-term storage of the order data is achieved, which can be used to review the operation of the preparation device and the system for automated cooking and serving of meals.

Preferably the motion system assists the preparation of the meal by handling and operating at least one tool detachably fixed to the at least one mechanical actuator, wherein the at least one tool is picked up and stored in a utensil system.

According to an embodiment, the subsystems include a distribution system with a mechanical device, wherein the master controller operates the motion system according to the command data to transport the meal from the at least one cooking device to the distribution system and wherein the master controller operates the distribution system according to the command data to arrange the meal in or on a serving device and to deliver the meal to a pickup station of the preparation device accessible by the customer.

The meal is preferably stored in an unoccupied storage location in a storage device of the distribution system after it is prepared, until the customer transmits an identification feature to the preparation device, after which the meal is transported from the storage device to the pickup station with the motion system, wherein in particular the identification feature is a code and/or a barcode and/or a RFID tag and/or the voice of the customer.

In an embodiment the storage device includes sensors that transmit occupation data to the master controller, wherein the occupation data indicates which storage locations are occupied and which storage locations are unoccupied, wherein the master controller decides in which storage location the meal is stored based on the occupation data.

This method achieves an efficient storage of the prepared meal. If all storage locations are occupied, the master controller decides which storage locations should be emptied to make room for the meal. For example, if a previously prepared meal has not been picked up for several hours and blocks a storage locations, this previously prepared meal will be removed from storage to make room for the new meal.

Preferably the subsystems include a washing system to perform a cleaning process to wash a dirty item in the preparation device, wherein the dirty item is transported to the washing system by the motion system and cleaned by dispensing water from a water dispenser and detergent from a detergent dispenser onto the dirty item, wherein the result of the cleaning process is checked afterwards by a camera.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1: a schematic view of an embodiment of a system for automated cooking and serving of meals,
- Fig. 2: a schematic view of an embodiment of an automated preparation device,
- Fig. 3: a schematic view of a container of a dispensing system,
- Fig. 4: a schematic view of an embodiment of a seasoning holder system.

In the drawings, the same or similar types of elements or respectively corresponding parts are provided with the same reference numbers in order to prevent the item from needing to be reintroduced.

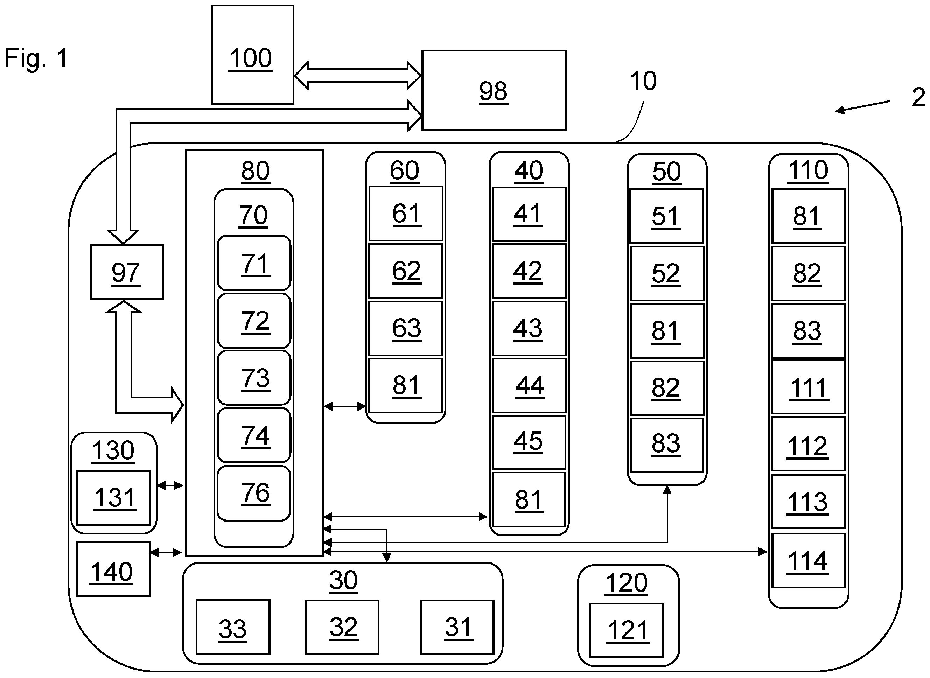

Fig. 1 shows a schematic view of a system 2 for automated cooking and serving of meals according to an embodiment of the invention. The system 2 comprises an automated preparation device 10 and an order control system 98. A customer interface device 100 may be part of the system 2 or separate to the system 2.

A customer places an order for a meal by entering data specifying the desired meal into the customer interface device 100. For example, the customer interface device 100 may be a smartphone of the customer, which the customer utilizes to place the order via an app. In a different embodiment, the customer interface device 100 is an order terminal on the preparation device 10 with an interface operable by the customer.

In any case, the customer interface device 100 coverts the order into order data and transmits the order data to the order control system 98, which is for example a cloud server connected to the internet or an external computer. Alternatively, the order control system 98 is part of the preparation device 10. If there is only one preparation device 10, the order control system 98 transmits the order data to the preparation device 10, for example via a router 97, so that the preparation device 10 can start preparing the meal ordered by the customer. If there is more than one preparation device 10 in the system 2, the order control system chooses a specified preparation device 10 out of all available preparation devices 10 based on at least one selection criteria, for example a workload of the preparation devices 10 or a distance between the specified preparation device 10 and the location of the customer who ordered the meal, and transmits the order data to the specified preparation device 10. The order control system 98 selects the specified preparation device 10 for example with algorithms and/or machine learning.

The order data is transmitted to a master controller 70 in the preparation device 10. In the embodiment shown in Fig. 1, the master controller 70 is housed in an industrial computer 80. The master controller 70 comprises a job emitter 71, a job coordinator 72, a job handler 73 and a kitchen task handler 74, which are realized as software. The order data is send to the job emitter 71, which sends the order data together with metadata to the job coordinator 72.

The job coordinator 72 manages all the requests for meals received by the preparation device 10. Upon receiving the order data, it decides if the preparation of the meal is started immediately, to a later time or if the order cannot be completed by the preparation device 10. If the job coordinator 72 decides to start the preparation of the meal, it enters the received and emitted order data into a production list of the preparation device 10 and then forwards the necessary data and variables to the job handler 73.

The job handler 73 contains functions and methods related to the handling, prioritization, and distribution of the data and metadata from the order data to be transmitted to subsystems of the preparation device 10. The job handler 73 may include one or more machine learning functions. As an example, the job handler 73 may use data over time to optimize the distribution of the jobs within the system 2 and report these optimizations to the order control system 98 in order to produce network wide updates, so that each preparation device 10 is able to optimize it's job handlers 73 method.

The job handler 73 transmits the jobs to the kitchen task handler 74 in order to be broken down into data subsets necessary for the preparation of the meal. In other words, the order data is broken down and transmitted as job data, which can be viewed as a full recipe, containing all the steps required to complete the order.

The kitchen task handler 74 receives the job data and further breaks down the job data into command data, also known as kitchen data. This command data or kitchen data is analogous to the individual steps for a recipe. The command data is transmitted as input to control nodes 81 of the various subsystems and to one or more environmental sensors 140 within the preparation device 10 in order to coordinate all of the subsystems for the production of the meal.

Apart from sending out data the master controller 70 also receives data from the subsystems and the environmental sensor 140 in order to coordinate the preparation of the meal. This received data might contain information about when a certain step in the preparation process is finished or if there are any malfunctions. The black arrows shown in Fig. 1 symbolize the flow of command data and other data in the preparation device.

Any data received or send by the master controller 70 is recorded on a logging system 76 within the master controller 70. This data is used for diagnostics and to improve the performance of the preparation device 10 and the order control system 98, which is done by using machine learning algorithms.

In the embodiment shown in Fig. 1, the subsystems comprise a motion system 30, a washing system 40, a dispensing system 50, a cooking device system 60, a distribution system 110, a utensil system 120 and a temperature system 130.

The motion system 30 comprises in this embodiment a mechanical actuator 31, an actuator controller 32 and a 3D-camera 33. The mechanical actuator 31 is for example a multi-axis robot-arm. It moves items within the preparation device 10 and handles tools 121, which are stored in the utensil system 120 in range of the mechanical actuator 31. The actuator controller 32 receives the command data and controls the mechanical actuator 31 accordingly. With the help of the 3D-camera 33 the actuator controller 32 monitors the operation of the mechanical actuator 31 and requests maintenance, if a malfunction is detected.

The dispensing system 50 comprises containers 51, which contain different ingredients necessary to create meals, for example water, flour, processed vegetables, oil and meat. A cooling system 52 of the dispensing system 50 preserves the ingredients in the containers 51. The containers 51 containing solid ingredients comprise a weight sensor 82 and a dispensing device, for example a wheel actuated by a stepper motor 83, to dispense the ingredients with great precision. The containers 51 containing liquid ingredients comprise a flow sensor and a pump, in particular a peristaltic pump, for the same purpose.

The dispensing system 50 dispenses the ingredients necessary for preparing the meal into one or more cooking devices of the cooking device system 60. The cooking devices are for example a cooking pot, a cooking pan, a noodle maker 61, a noodle maker 62 or an induction cooker 63. In the cooking device the ingredients are collected and processed to prepare the meal. If necessary, the motion system 30 supports the preparation of the meal by moving the cooking device within the preparation device 10 or by operating tools 121 to process the ingredients within the cooking device. If necessary, the tools 121 operated by the mechanical actuator 31 can be replaced with different tools 121 from the utensil system 120 required for different preparation steps at any time during preparation. If the preparation of the meal requires heating, the ingredients can be heated in the induction cooker 63 and/or the cooking device can be moved to the temperature system 130, where it can be heated with a hotplate 131.

After the preparation of the meal is complete, the meal is moved to the distribution system 110 by the motion system 30. In the distribution system 110, the meal is arranged on or in a serving device 112. For example, the meal is arranged on a plate or in a box. Afterwards, the meal is weighted with a weight sensor 82 and photographed with a camera 111 for quality control.

If the customer is present to pick up his meal, the meal is moved to a pickup station 113, for example with a stepper motor 83 or another mechanical device. The pickup station 113 is a part of the preparation device 10, which is accessible from the outside, so that the customer can pick up his meal.

If the customer is not present when the preparation of the meal is completed, the meal is instead moved to an unoccupied space within a storage device 114. The storage device 114 recognizes which storage locations are unoccupied with sensors in the storage locations. In the case that all storage locations of the storage device are occupied, the master controller 70 chooses a previously stored meal in the storage device 114 to be removed from storage, so that the newly prepared meal can be stored in the storage location instead.

When the customer arrives, he can identify himself with an identification feature, for example a code, a barcode, a RFID-tag or his voice. If the identification is successful, the meal is delivered from the storage device 114 to the pickup station 113.

The preparation device 10 further comprises a washing system 40. The washing system 40 cleans dirty items in the preparation device 10, for example used cooking devices, tools and plates. In the embodiment shown in Fig. 1, the washing system 40 comprises a sink 41, a water dispenser 42, a detergent dispenser 43, a pump 44 and a camera 45. The motion system 30 places dirty items in the sink 41. Afterwards the water dispenser 42 dispenses water and the detergent dispenser 43 a detergent, for example soap, into the sink. This is done with one or more pumps 44, in particular peristaltic pumps. The cleaning can be assisted by the motion system 30, for example by handling a suitable tool 121. When the cleaning process is finished, the result is checked with the camera 45.

According to an embodiment not shown in Fig. 1, the preparation device 10 comprises a hygiene system to sanitize surfaces of the preparation device 10. The hygiene system comprises a disinfection device to disinfect the surfaces and a hygiene monitoring device to locate contaminations. The disinfection device is for example a UV light tool handled by the mechanical actuator 31. The hygiene monitoring device is for example a photometer for the measurement of adenosine triphosphate (ATP). When there is currently no order send to the preparation device 10, the hygiene system will sanitize the surfaces of the preparation device 10 in regular intervals, until the master controller 70 receives new order data.

Also not shown in Fig. 1 is a fume extraction system, which is located in the upper part of the preparation device 10. The fume extraction system comprises a filter, a housing, a fan, a controller and ducting and extracts any fumes generated in the preparation device 10. According to an embodiment, the fume extraction system utilizes the fumes to eliminate condensation on windows of the preparation device.

Apart from the subsystems the preparation device 10 according to the embodiment shown in Fig. 1 comprises at least one environmental sensor 140, for example an ambient temperature sensor and/or a humidity sensor and/or an air pressure sensor and/or a sensor to measure the orientation of the preparation device. This sensor 140 measures an environmental condition, for example the temperature of the ambient air, the humidity of the ambient air, the pressure of the ambient air and/or the orientation of the preparation device.

The environmental sensor 140 measures the environmental condition and sends environmental data containing the value of the at least one environmental condition to the master controller 70. The master controller evaluates the environmental data and adjusts at least one meal preparation parameter accordingly, for example by adjusting the command data. The at least one meal preparation parameter is in particular a cooking time, a cooking temperature and/or a quantity of an ingredient.

As an example, the boiling point of water changes depending on the air pressure. To compensate this, the master controller adjusts the cooking time and/or the heating power according to the value of the ambient air pressure. In this way, the meal will always be cooked exactly the same way, no matter of the environmental conditions. For example, the preparation device can cook pasta "al dente" at sea level or in the mountains, as the air pressure difference caused by the difference in altitude is compensated.

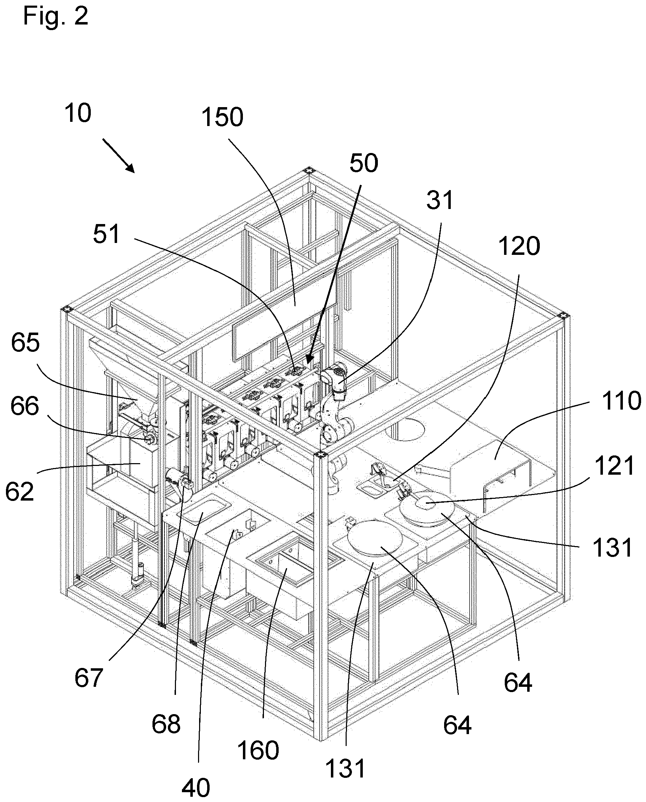

Fig. 2 shows a schematic view of an automated preparation device 10 according to an embodiment of the invention. The preparation device 10 comprises a dispensing system 50 with a plurality of containers 51 containing ingredients. For the sake of clarity, only one of the containers 51 is indicated with a reference sign. The preparation device 10 also includes a noddle maker 62. A flour hopper 65 and a salt dispenser 66 are arranged above the noodle maker 62 to supply the noddle maker 62 with the ingredients necessary to produce pasta. A noddle cutter 67 cuts the pasta extracted from the noddle maker 62 and dispenses it into a catch tray 68. Afterwards, the pasta is cooked in salted water, which can be done in a hot water bath 160, a pan 64 or a pot. The hot water bath 160 and hotplates 131 are for example part of a temperature system 130.

A mechanical actuator 31 in the form of a multi-axis robot arm is located in the centre of the preparation device 10 in order to maximize its reach, so that it can interact with all the subsystems, for example the tool system 120, the washing system 40, the dispensing system 50, the catch tray 68, the hot water bath 160, the distribution system 110 or pans 64 placed on top of hotplates 131.

To prepare a pasta meal according to an exemplary embodiment of the invention, the mechanical actuator 31 will grip the catch tray 68 with pasta and navigate it into the water bath 160 where it will be cooked until being moved, finally, to a pan 64 on the hotplate 131. During the preparation process, the mechanical actuator 31 will grip other trays filled with ingredients dispensed by the dispensing system 50, for example vegetables, and add them into the pan 64. The meal will be cooked in the pan 64. Afterwards, the mechanical actuator 31 grips the pan 64 and fills the cooked meal onto a plate as part of the distribution system 110, so that the meal can be served to a customer. A display screen 150, which is placed in the upper part of the preparation device 10 to be visible to the customers, displays useful information, for example different available meals, prices for the meals and meals, which are ready to be picked up.

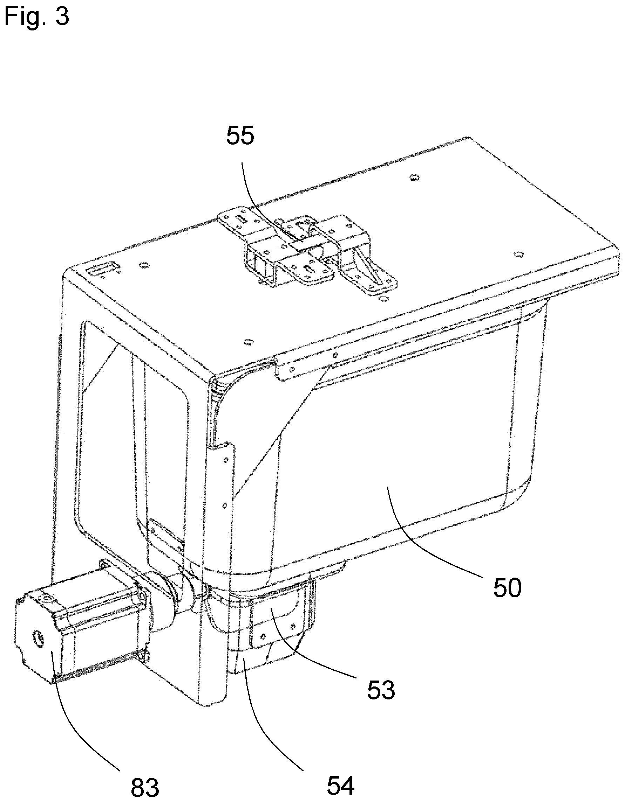

Fig. 3 shows a detailed view of one of the containers 51 of the dispensing system 50 shown in Fig. 2. The container 51 can be filled with different ingredients. In order to dispense the ingredients from the container 51, a stepper motor 83 rotates a wheel 53, for example a dosing wheel or rotary feeder, so that the ingredients are dispensed out of an opening 54. A load cell 55 is disposed on top of the container 51 to check the filling level of the ingredients in the container 51.

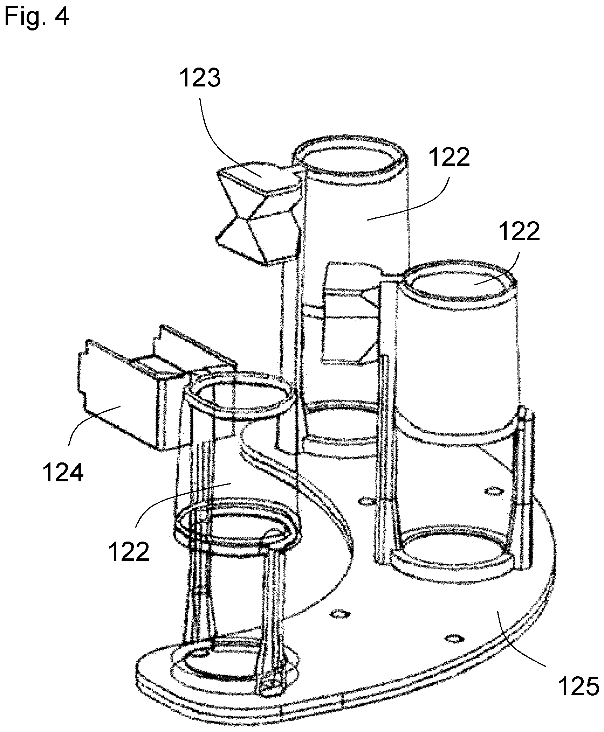

Fig. 4 shows a schematic view of a seasoning holder system, which is part of the preparation device 10 according to an embodiment of the invention. The seasoning holder system comprises a number of seasoning holders 122 filled with different seasonings, for example salt or pepper. When the preparation of the meal requires adding one of the seasonings, the mechanical actuator 31 grips the seasoning holder 122 containing this seasoning and dispenses the required quantity of seasoning to the meal. The seasoning holders are arranged on a magnetic mounting plate 125. The lower part of the seasoning holders 122 are preferably made of a magnetisable material, so that they are held securely on the magnetic mounting plate 125. The seasoning holders 122 further comprise retaining bodies 123, 124, also known as gripping interfaces. These retaining bodies are shaped in a way that they automatically align themselves when gripped by the mechanical actuator 31. For example, the retaining bodies 123 have an hourglass shaped cross-section or an H-shaped cross-section 124. The shape of the retaining bodies 123, 124 allows the robot arm to easily grip, hold and align the seasoning holders 122.

According to an embodiment of the invention, similar retaining bodies are used for the tools 121 of the utensil system 120 or cooking devices of the cooking device system 60 in order to automatically align the tools 121 or the cooking devices to the mechanical actuator 31.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of reference signs

- 2: system
- 10: automated preparation device
- 30: motion system
- 31: mechanical actuator
- 32: actuator controller
- 33: 3D-camera
- 40: washing system
- 41: sink
- 42: water dispenser
- 43: detergent dispenser
- 44: pump
- 45: camera
- 50: dispensing system
- 51: container
- 52: cooling system
- 53: wheel
- 54: opening
- 55: load cell
- 60: cooking device system
- 61: noodle cooker
- 62: noodle maker
- 63: induction cooker
- 64: pan
- 65: flour hopper
- 66: salt disposer
- 67: noddle cutter
- 68: catch tray
- 70: master controller
- 71: job emitter
- 72: job coordinator
- 73: job handler
- 74: kitchen task handler
- 76: logging system
- 80: industrial computer
- 81: control node
- 82: weight sensor
- 83: stepper motor
- 97: router
- 98: order control system
- 100: customer interface device
- 110: distribution system
- 111: camera
- 112: serving device
- 113: pickup station
- 114: storage device
- 120: utensil system
- 121: tool
- 122: seasoning holder
- 123: retaining body
- 124: retaining body
- 125: magnetic mounting plate
- 130: temperature system
- 131: hotplate
- 140: environmental sensor
- 150: display screen
- 160: hot water bath

## Claims

1. A system (2) for automated cooking and serving of meals, comprising an automated preparation device (10), wherein the preparation device (10) is configured to receive order data for a meal, the order data containing information about the kind of meal requested by a customer, the preparation device (10) encompassing a master controller (70) and subsystems, the subsystems including
i. a motion system (30) with at least one mechanical actuator (31), configured to hold and operate tools and move items within the preparation device,
ii. a dispensing system (50) with at least one container (51) holding ingredients and
iii. a cooking device system (60) with at least one cooking device to hold the ingredients,
wherein the master controller (70) is configured to convert the order data into command data, the command data containing instructions for the subsystems necessary for preparing the meal, and transmitting the command data to the subsystems in order to operate the dispensing system (50) according to the command data to dispense the ingredients specified in the command data into the at least one cooking device and operate the cooking device system (60) and/or the motion system (30) according to the command data to prepare the meal from the ingredients in the at least one cooking device.

2. The system (2) according to claim 1, **characterized in that** the preparation device (10) includes at least one environmental sensor (140) to measure at least one environmental condition, wherein the preparation device (10) is configured to adjust at least one meal preparation parameter, in particular by adjusting the command data, based on the at least one environmental condition, wherein the at least one environmental sensor (140) includes in particular an ambient temperature sensor and/or a humidity sensor and/or an air pressure sensor and/or a sensor to measure the orientation and/or tilt of the preparation device (10).

3. The system (2) according to claim 1 or 2 comprising an order control system (98), which is separate from the automated preparation device (10) and which communicates with the preparation device (10) via a wire-based or wireless connection, in particular via the internet, wherein the order control system (98) is configured to receive the order data from a customer interface device (100) and transmit the order data to the preparation device (10), wherein in particular the system (2) comprises at least two preparation devices (10), whereas in particular the order control system (98) is configured to transmit the order data to a specified preparation device (10) picked from the at least two preparation devices (10) based on at least one selection criteria, wherein the at least one selection criteria includes in particular a workload of the preparation devices (10) and/or a distance between the location of the specified preparation device (10) and a location of the customer.

4. The system (2) according to one of the claims 1 to 3, **characterized in that** the at least one mechanical actuator (31) comprises a multi-axis robotic arm and/or a conveyor belt and/or a hydraulic lift.

5. The system (2) according to one of the claims 1 to 4, **characterized in that** the subsystems include a utensil system (120) containing a plurality of tools (121), which are formed to be detachably fixed to the at least one mechanical actuator (31).

6. The system (2) according to one of the claims 1 to 5, **characterized in that** the subsystems include a distribution system (110) with a mechanical device, wherein the master controller (70) is configured to operate the motion system (30) according to the command data to transport the meal from the at least one cooking device to the distribution system (110) and operate the distribution system (110) according to the command data to arrange the meal in or on a serving device (112) and deliver the meal to a pickup station (113) of the preparation device (10) accessible by the customer, whereas in particular the distribution system (110) includes a storage device (114) to store the meal after it is prepared, wherein in particular the master controller (70) is configured to control the motion system (30) to move the meal from the storage device (114) to the pickup station (113), if the customer transmits an identification feature to the preparation device, wherein in particular the identification feature is a code and/or a barcode and/or a RFID tag and/or the voice of the customer.

7. The system (2) according to one of the claims 1 to 6, **characterized in that** the subsystems include a temperature system (130) with at least one temperature device to heat or cool the ingredients in the at least one cooking device, wherein the master controller (70) is configured to move the at least one cooking device to the temperature system (130) during preparation of the meal.

8. The system (2) according to one of the claims 1 to 7, **characterized in that** the subsystems include a washing system (40) to wash a dirty item in the preparation device (10), wherein the washing system (40) comprises a camera (45), a water dispenser (42) and a detergent dispenser (43), wherein the master controller (70) is configured to control the motion system (30) to move the dirty item to the washing system (40), open the water dispenser (42) and the detergent dispenser (43) in order to clean the dirty item and verify if the dirty item is cleaned correctly with the camera (45).

9. The system (2) according to one of the claims 1 to 8, **characterized in that** the subsystems include a hygiene system to sanitize the preparation device (10), wherein the hygiene system comprises at least one sanitization tool, in particular a disinfection device and/or a hygiene monitoring device, wherein the at least one mechanical actuator (31) is configured to operate the sanitization tool to clean surfaces of the preparation device (10) and/or inspect the surfaces for contaminations.

10. The system (2) according to one of the claims 1 to 9, **characterized in that** the preparation device (10) includes a 3D-camera (33) and an actuator controller (32), wherein the actuator controller (32) is configured to receive camera data from the 3D-camera (32) and use the camera data to check, if the at least one mechanical actuator (31) reacts to the command data according to specifications.

11. A method to cook and serve a meal via a system (2) for automated cooking and serving of meals, containing the following steps:
- Transmitting order data to a preparation device (10), the order data containing information about the kind of meal requested by a customer,
- Converting the order data into command data in a master controller (70) of the preparation device (10), the command data containing instructions for subsystems of the preparation device (10) necessary for preparing the meal,
- Transmitting the command data to at least the following subsystems:
i. a motion system (30) with at least one mechanical actuator (31), configured to hold and operate tools and move items within the preparation device (10),
ii. a dispensing system (50) with at least one container (51) holding ingredients and
iii. a cooking device system (60) with at least one cooking device to hold the ingredients,
- Operating the dispensing system (50) according to the command data to dispense the ingredients specified in the command data into the at least one cooking device,
- Operating the cooking device system (60) and/or the motion system (30) according to the command data to prepare the meal from the ingredients in the at least one cooking device.

12. The method according to claim 11, **characterized in that** at least one environmental condition is measured with at least one environmental sensor (140), wherein at least one meal preparation parameter is adjusted, in particular by adjusting the command data, based on the at least one environmental condition, wherein the at least one environmental sensor (140) includes in particular an ambient temperature sensor and/or a humidity sensor and/or an air pressure sensor and/or a sensor to measure the orientation and/or tilt of the preparation device (10).

13. The method according to claim 11 or 12 **characterized in that** the system (2) for automated cooking and serving of meals comprises an order control system (98), which is separate from the preparation device (10) and which communicates with the preparation device (10) via a wire-based or wireless connection, in particular via the internet, wherein the order data is transmitted from a customer interface device (100) to the order control system (98) and afterwards transmitted from the order control system (98) to the preparation device (10), wherein in particular the order control system (98) selects a specified preparation device (10) picked from at least two preparation devices (10) after receiving the order data and transmits the order data to the specified preparation device (10), wherein in particular the order control system (98) selects the specified preparation device (10) based on at least one selection criteria, wherein the at least one selection criteria includes in particular a workload of the preparation devices (10) and/or a distance between the location of the specified preparation device (10) and a location of the customer specified in the order data, wherein in particular the order data is stored in the order control system (98) and deleted from the master controller (70) after the meal has been picked up by the customer.

14. The method according to one of the claims 11 to 13, **characterized in that** the motion system (30) assists the preparation of the meal by handling and operating at least one tool (121) detachably fixed to the at least one mechanical actuator (31), wherein the at least one tool (121) is picked up and stored in a utensil system (120).

15. The method according to one of the claims 11 to 14, **characterized in that** the subsystems include a distribution system (110) with a mechanical device, wherein the master controller (70) operates the motion system (30) according to the command data to transport the meal from the at least one cooking device to the distribution system (110) and wherein the master controller (70) operates the distribution system (110) according to the command data to arrange the meal in or on a serving device (112) and to deliver the meal to a pickup station (113) of the preparation device (10) accessible by the customer, wherein in particular the meal is stored in an unoccupied storage location in a storage device (113) of the distribution system (110) after it is prepared, until the customer transmits an identification feature to the preparation device (10), after which the meal is transported from the storage device (114) to the pickup station (113) with the motion system (30), wherein in particular the identification feature is a code and/or a barcode and/or a RFID tag and/or the voice of the customer, whereas in particular the storage device (114) includes sensors that transmit occupation data to the master controller (70), wherein in particular the occupation data indicates which storage locations are occupied and which storage locations are unoccupied, wherein in particular the master controller (70) decides in which storage location the meal is stored based on the occupation data.
